# EUROPEAN PATENT SPECIFICATION

(11) **EP 4 277 953 B1**
(45) Date of publication and mention of the grant of the patent: **15.07.2026**
(21) Application number: 22700029.6
(22) Date of filing: 05.01.2022
(51) Int. Cl.: C08L 67/04

(54) **POLYMER BLEND**
POLYMERMISCHUNG
MÉLANGE DE POLYMÈRES

(30) Priority: 15.01.2021 GB 202100551
(43) Date of publication of application: 22.11.2023
(73) Proprietor: Floreon Technology Ltd, Hessle HU13 0GD (GB)
(72) Inventor: GILL, Andrew, Hessle HU13 0GD (GB)
(74) Representative: Murgitroyd & Company
(86) International application number: PCT/EP2022/050106
(87) International publication number: WO 2022/152598

(56) References cited:
- EP-A1- 2 759 569
- US-A1- 2015 361 258
- BORUVKA MARTIN ET AL: "Solid and microcellular polylactide nucleated with PLA stereocomplex and cellulose nanocrystals", JOURNAL OF THERMAL ANALYSIS AND CALORIMETRY, KLUWER, DORDRECHT, NL, vol. 142, no. 2, 2 March 2020 (2020-03-02), pages 695 - 713, XP037277369, ISSN: 1388-6150, [retrieved on 20200302], DOI: 10.1007/S10973-020-09477-2

## Description

### Field of invention

The present invention relates to a polymer blend and in particular although not exclusively, to a biodegradable and preferably compostable polymer blend derived primarily from organic and optionally plant-based material.

### Background

Polylactic acid (PLA) is regarded commonly as a biodegradable and compostable polymer obtained from sustainable resources such as plant matter and in particular plant-derived sugars. In a number of respects, including CO₂ footprint, biodegradability and general impact on land and marine life, PLA is more attractive for commercial applications such as packaging, plastic products, fibres etc relative to more conventional petroleum-based polymers. In particular, PLA is now readily available in large volumes and is produced commercially and sustainably from plant feedstock via a low carbon footprint process.

PLA can be recycled either by thermoplastic methods or by hydrolytic cracking to the original monomer. PLA undergoes reasonably rapid biodegradation via a two-stage process including initial hydrolysis to low molecular weight oligomers and then final decomposition by microorganisms.

However, at around room temperature, PLA has a number of disadvantageous physical and mechanical characteristics including in particular low impact strength and poor toughness. PLA is considered generally too brittle for a number of specific applications where high contact forces such as collision with hard objects may occur. Existing approaches to increase the impact strength of PLA have focussed on blending with higher impact strength polymers, with the resulting blend having an impact resistance being the average of each of the constituents. Resin compositions of PLA and polycarbonate have achieved improved flow properties, impact strength and heat resistance. However, polycarbonates are generally petroleum-based which increase the environmental load. Alternative approaches to improve toughness and crystallisation of PLA have included block copolymerisation, nucleation and/or plasticisation and chemical modification. Chemical modification can be complex and typically requires non-environmentally friendly catalysts and other monomers. Plasticising agents have also been used to improve PLA crystallisation kinetics and impact resistance. However, plasticisers tend to migrate to different regions or surfaces due to other chemical driving forces which leads to general embrittlement of the blend.

WO 2016/086318 describes a polymer blend comprising a polyamide polymer, a polyester and an epoxy-based compatibilizer in an attempt to improve toughness, ductility, stiffness and chemical resistance. WO 2014/053878 describes PLA based blends with isosorbide-based copolymers to improve impact strength. WO 2014/115029 also describes a blend based on PLA in an attempt to improve impact strength relative to neat or virgin PLA. The blends described comprise fillers, nucleating agents and/or chain extenders.

EP 2759569 A1 relates to a polylactic acid-based composition with improved moldability, heat resistance and impact strength for use as an automobile part. The composition includes PLLA, PDLA and a thermoplastic elastomer. Boruvka Martin et al: 'Solid and microcellular polylactide nucleated with PLA stereocomplex and cellulose nancrystals', Journal of Thermal Analysis and Calorimetry, Kluwer, Dordrecht, NL, vol. 142, no. 2, 2 March 2020 (2020-03-02), pages 695-713, discloses a polylactide composition with improved impact resistance based on PLA, PDLA and cellulose nanocrystals. US 2015/361258 A1 relates to polylactic acid blends with improved impact strength and distortion temperature based on a functionalised polyolefin copolymer and a thermoplastic elastomeric segmented block copolymer.

However, there remains a need for a biodegradable and preferably compostable sustainable polymer blend in combination with the desired environmental credentials and importantly physical and mechanical characteristics including in particular toughness, ductility, stiffness, impact resistance and chemical resistance.

### Summary of the Invention

The present disclosure provides a blend and a composition comprising predominantly (by weight percent) an aliphatic polyester being in particular polylactic acid (PLA) derived from natural or sustainable sources such as plant matter. The present blend and composition includes further components also derived primarily from sustainable sources including further specific polyesters. In particular, the present blend and composition includes distinct forms of polylactide including poly-LD-lactide (PLA) and poly-D-lactide (PDLA).

According to conventional commercial synthetic processes, poly-LD-lactide (PLA) as referred to herein, is the resulting racemic mixture of L-D-lactides and D-lactides to produce the poly-DL-lactide being an amorphous material. This PLA, as will be appreciated, includes predominantly L-lactide units relative to the D-lactide units of the polymer chains.

The present blend further comprises as a separate component (relative to the poly-LD-lactide (PLA)) and starting material, the substantially pure racemate poly-D-lactide (PDLA). The blend further includes a thermoplastic elastomer to increase the impact strength relative to the virgin or high purity PLA. The inventors have observed that with the addition of the thermoplastic elastomer only, only a small impact strength increase is provided relative to the high purity PLA. However, when PLA and the thermoplastic elastomer are blended further with poly-D-lactide, as a third constituent, the PDLA acting as a nucleating agent improves crystallisation significantly (at the point of moulding) which in turn increases significantly the impact strength relative to the binary blend. In particular, at the compositions described herein, the impact strength is increased by over a factor of six relative to the binary blend of PLA with thermoplastic elastomer for example being polyether block amide (PEBA) typically referred to as PEBAX^{™}.

Preferably, the present blend comprises the thermoplastic elastomer with a renewable carbon content of over 70%, 80%, or 90% and/or a biobased, renewable or recyclable content of over 70%, 80%, or 90%. Preferably, a majority wt% of the present blend is formed from or comprises biodegradable components. Optionally, a minority wt% component of the present blend is non-degradable. Optionally the only component of the present blend that is non-degradable is the thermoplastic elastomer.

According to a first aspect of the present invention there is provided a polymer blend comprising: poly-DL-lactide at 70 to 94.5 wt%; poly-D-lactide at 0.5 to 10 wt%; and a thermoplastic elastomer at 5 to 20 wt%.

Preferably, the polymer blend further comprises the poly-DL-lactide and the poly-D-lactide in combination at not less than 80 wt%.

Preferably, the poly-DL-lactide and the poly-D-lactide are derived from plant or naturally occurring organic matter. Preferably, the poly-DL-lactide and/or the poly-D-lactide are derived from plant sugars or starch.

Preferably, the poly-DL-lactide comprises predominantly L-lactide units relative to D-lactide units by wt%.

Preferably, the poly-DL-lactide and/or the poly-D-lactide comprises an optical purity of not less than 99% L.

Preferably, the poly-DL-lactide is included at 70-90 wt%; 72-88 wt%; 74-86 wt% or 76-84 wt%; the poly-D-lactide is included at 1-9 wt%; 1.5-8.5 wt%; 2-8 wt% or 4-8 wt%; and/or the thermoplastic elastomer is included at 6-20 wt%; 8-20 wt%; 10-20 wt%; 12-18 wt% or 13-17 wt% and optionally; any remaining wt% is the poly-DL-lactide. In particular, the present polymer blend comprises poly-DL-lactide as balanced to provide a total 100 wt%.

Optionally, the thermoplastic elastomer is any one or a combination of: a styrenic block; copolymer; a polyolefin elastomer; a vulcanizate; a polyurethane; a copolyester; a polyamide; a polyether block amide (PEBA).

Optionally, the blend comprises: the poly-DL-lactide at 75-84 wt%; the poly-D-lactide at 4-8 wt%; and wherein the thermoplastic elastomer is a polyether bock amide at 12-17 wt%.

Optionally, the blend consists of the poly-DL-lactide at 75-84 wt%; the poly-D-lactide at 4-8 wt%; and wherein the thermoplastic elastomer is a polyether bock amide at 12-17 wt%.

Preferably, the poly-DL-lactide is the majority wt% component within the blend. Reference to the majority wt% component encompasses a mass/weight amount of poly-DL-lactide relative to a mass/weight of any other component present within the blend.

According to a further aspect of the present invention there is provided a polymer-based composition comprising: a polymer blend as claimed herein; and any one of or a combination of: a filler; a compatibilizer; a processing aid and optionally, wherein the filler comprises any one or a combination of: a mineral based filler, calcium carbonate, talc, glass fibers, a silicate, a calcium inosilicate material.

Optionally, A) the compatibilizer comprises any one or a combination of: a styrene-acrylic multi-functional epoxide oligomer, a random styrene-acrylonitrile-glycidyl methacrylate terpolymer, glycidyl methacrylate, maleic anhydride, phenyl diisocyanate; and/or B) the processing aid comprises any one or a combination of: PTFE powder, an amide wax, rice bran wax, ethylene bis-stearamide, silicon dioxide. Optionally the processing aid comprises a surface friction reducing component. Such an additive is configured to reduce scuffing and scratching, improve packing and de-nesting of final articles as well as to facilitate processing via moulding and extrusion. Processing aids may comprise waxes, lubricants and the like, commonly used with PLA or other plastic based blends. An example processing aid includes Incromax^{™} 100 (Croda International plc, Goole, UK). Optionally, the processing aids may be included at wt% 0.1 to 1.0. Other suitable waxes include rice bran wax or ethylene bis-stearamide or silicon dioxide.

According to a further aspect of the present invention there is provided a method of manufacturing a polymer blend comprising: blending 70 to 94.5 wt% of a poly-DL-lactide with 0.5 to 10 wt% of a poly-D-lactide; and 5 to 20 wt% of a thermoplastic elastomer to create the polymer blend.

Optionally, according to the present method, prior to said step of blending, agitating pellets of the poly-DL-lactide at a temperature in a range 70 to 95°C or 80 to 85°C.

Optionally, the step of agitating the pellets comprises rotating the pellets in a drum at said temperature range.

According to a further aspect of the present invention there is provided a method of polymer processing to create a plastic product comprising the steps of processing the polymer blend or polymer composition as claimed herein by any one or a combination of: extrusion; injection moulding; blow moulding; thermoforming.

According to a further aspect of the present invention there is provided a method of manufacturing an article by polymer processing as claimed and described herein further comprising: annealing the plastic product or article after the step of polymer processing i.e., forming, moulding or extruding.

Optionally, the step of annealing comprises heating the plastic product or article at a temperature in the range 50°C to 140°C or 60°C to 130°C to induce crystallinity.

According to a further aspect of the present invention there is provided a method of creating a plastic filament suitable for 3D printing comprising the method as claimed herein.

### Detailed description of preferred embodiment of the invention

### Examples

### Materials Used

Development was undertaken using Ingeo^{™} 3260HP, (from NatureWorks LLC), a high optical purity grade of poly-L-lactic acid for injection moulding which is designed to crystallise when processed appropriately. As a nucleating agent, Luminy^{™} D070 or Luminy^{™} D120 (Total Corbion PLA), grades of poly-D-lactic acid with an optical purity of 99.5% by weight with relatively low and high molecular weight respectively were used. PEBAX^{™} 2533 SA01 available from Arkema Inc., (polyether block amide), Dryflex Green^{™} OFB 52224 N (a thermoplastic elastomer with a renewable carbon content of 81%), Dryflex Green^{™} SC 52273 N (a thermoplastic elastomer with a biobased content of 82%) both from HEXPOL TPE GmbH or Greenflex^{™} ML50 (an ethylene vinyl-acetate copolymer) were used as a non-degradable elastomeric modifier (from Versalis S.p.A).

### Blend Preparation

A range of formulations were produced incorporating an injection moulding grade of poly-L-lactic acid with high optical purity (Ingeo 3260HP) as the matrix polymer, a non-degradable elastomer as impact strength enhancer and poly-D-lactic acid (Luminy D070 or D120) as nucleating agent. The blends described are outlined in Table 1. The renewable (plant based) content of all blends was a minimum of 85% by weight based on PLA content. When used in durable applications requiring high impact resistance it is anticipated that PLA based materials will be recycled (either chemically or mechanically) in which case compostability, designed to facilitate the capture and disposal of food waste is no longer of benefit.

**Table 1: PLA based blends incorporating a non-degradable elastomer.**

| **Material** | **Ingeo 3260HP** | **PEBAX 2533 SA01** | **Dryflex Green OFB 52224 N** | **Dryflex Green SC 52273 N** | **Luminy D070** | **Luminy D120** | **Greenflex ML50** |
|---|---|---|---|---|---|---|---|
| Blend 1 | 85 | 15 | | | | | |
| Blend 2 | 85 | | 15 | | | | |
| Blend 3 | 85 | | | 15 | | | |
| Blend 4 | 79 | 15 | | | 6 | | |
| Blend 5 | 78 | | | | | 7 | 15 |
| Blend 6 | 79 | 15 | | | | 6 | |

Compounds were prepared using a twin screw extruder as is typical for the preparation of compounds based on polylactic acid. A typical temperature profile of 175 °C in the feeding section and 180 °C in the subsequent mixing zones was used with minor modifications as necessary to achieve stable throughput. In formulations utilising DPLA (Luminy D070, D120) further increases to melt and die temperature were necessary but not exceeding 210 °C. The strand was passed through a cooling water bath and dried with an air knife prior to pelletisation. Materials were dried at 60 °C under vacuum for 24 hours prior to use and were transferred quickly to the hopper to minimise moisture pickup.

For tensile and impact analysis samples of the appropriate dimensions were moulded using a Boy 22M injection moulder and a melt temperature between 170 °C and 200 °C, with a mould temperature of around 23 °C. A Ceast Resil Impact Junior, with a 2J hammer, running to ASTMD256 (equivalent to Izod/ ISO 180) was used to determine impact resistance. Samples were left to acclimatise at ambient conditions for at least 48 hours before testing to determine physical properties.

In a further experiment, Blend 6 was injection moulded using standard conditions and the placed on a metal tray within an air circulating oven at 80 °C for 2 hours before being tested again for impact resistance after acclimatising at ambient for 48 hours.

### Performance Results of Non-Degradable Blends

The impact and tensile properties of all formulations was evaluated and compared. The addition of non-degradable elastomers to PLA in all cases led to an increase in impact resistance, and in particular for PEBAX ^{®} when combined with DPLA when used as a nucleating agent. A typical notched Izod impact value (ISO 180) for unmodified PLA is between 2 and 4 kJ/m² (as reported in related patent applications and evidenced by published data on this topic. and all samples were found to exceed this value. The combination of DPLA with PLA at addition levels of up to 15% is well understood and no evidence of a significant improvement in impact strength is typically observed when mixing these materials. The tensile and impact characteristics of each blend is reported in Table 2.

**Table 2: Impact strength and modulus of non-degradable elastomer modified blends. Results are mean average of 10 repeats (impact) and 5 repeats (modulus).**

| **Material** | **Impact Strength (kJ/m²)** | **Tensile Modulus (GPa)** | **Tensile Strength (MPa)** |
|---|---|---|---|
| Blend 1 | 7.41 | 1.51 | 40.4 |
| Blend 2 | 4.94 | 1.70 | 60 |
| Blend 3 | 10.73 | 1.47 | 35.79 |
| Blend 4 | 17.43 | 1.49 | 38.10 |
| Blend 5 | 4.73 | 1.45 | 42.29 |
| Blend 6 | 20.45 | 1.55 | 43.28 |

On combining PEBAX with PLA at 15% by weight of PEBAX the impact resistance of PLA is recorded as 7.41 kJ/m², a significant improvement over PLA alone which is typically less than 4 kJ/m². When the PEBAX content is held at 15% and 6% by weight of the PLA is replaced with DPLA (Blend 4) a much more pronounced increase in impact strength is observed, reaching a value of 17.43. This blend was also produced with a higher molecular weight of DPLA (Luminy D120, Blend 6. Samples of Blend 6 were first moulded and tested according to the approach followed with the other samples and found to have identical properties. Samples of Blend 6 were also moulded and laid flat on metal tray within an air circulating oven at 80 °C for 2 hours before being tested again for impact resistance after acclimatising at ambient for 48 hours. Heating the material in this way is known to induce crystallinity in PLA, leading to an increased heat deflection temperature typically of around 150 °C based on the performance of the PLA matrix. On re-testing the impact resistance of the sample the impact resistance was found to have increased to a figure of 20.45 kJ/m² and the impact samples began to bend during testing without breaking completely, indicating changed fracture mechanics and a more ductile material.

Other elastomers combined with PLA alone (Blends 2 and 3, based on partially biobased thermoplastic elastomers) were also found to yield some improvement in impact characteristics but still fall short of the figure achieved for the DPLA/ PEBAX combination. A further formulation (Blend 5) containing PLA, DPLA and an elastomeric material (Greenflex ML50, an ethylene vinyl-acetate copolymer) was also evaluated with and without flame retardant to compare impact performance. Compounding with EVA has been reported as an effective method of increasing the impact resistance of PLA. The improvement in impact strength achieved was minor in this case indicating that the effect is specific to combinations of PLLA, PDLA and PEBAX. A possible explanation for this is the tendency of PLLA and PDLA to interact through hydrogen bonding, forming a 'stereocomplex' with a much higher melting point than standard PLA (230°C and 160-170°C respectively). The addition of PEBAX may lead to an as yet observed interaction through hydrogen bonding between the stereocomplex and PEBAX or a more ordered and tightly packed PLA matrix within which the PEBAX is dispersed. The strong improvement of impact strength in the crystallised material lends further evidence to the theory that the PLA is forming a more ordered PLA phase within the PEBAX domains are likely to be distributed, but with good interfacial compatibility leading to changed fracture mechanics.

Unless defined otherwise all technical and scientific terms used herein have the same meaning as commonly understood to one of ordinary skill in the art to which the presently described subject matter pertains.

Unless otherwise indicated, any reference to "wt%" refers to the mass fraction of the component relative to the total mass of the blend.

Where a range of values is provided, for example, concentration ranges, percentage range or ratio ranges, it is understood that each intervening value, to the tenth of the unit of the lower limit, unless the context clearly dictates otherwise, between the upper and lower limit of that range and any other stated or intervening value in that stated range, is encompassed within the described subject matter. The upper and lower limits of these smaller ranges may independently be included in the smaller ranges, and such embodiments are also encompassed within the described subject matter, subject to any specifically excluded limit in the stated range. Where the stated range includes one or both of the limits, ranges excluding either or both of those included limits are also included in the described subject matter.

It should be understood that the terms "a" and "an" as used above and elsewhere herein refer to "one or more" of the enumerated components. It will be clear to one of ordinary skill in the art that the use of the singular includes the plural unless specifically stated otherwise. Therefore, the terms "a", "an" and "at least one" are used interchangeably in this application.

Unless otherwise indicated, all numbers expressing quantities of ingredients, properties such as size, weight, reaction conditions and so forth used in the specification and claims are to be understood as being modified in all instances by the term "about". Accordingly, unless indicated to the contrary, the numerical parameters set forth in the following specification and attached claims are approximations that may vary depending upon the desired properties sought to be obtained by the present subject matter. At the very least, and not as an attempt to limit the application of the doctrine of equivalents to the scope of the claims, each numerical parameter should at least be construed in light of the number of reported significant digits and by applying ordinary rounding techniques.

Throughout the application, descriptions of various embodiments use "comprising" language; however, it will be understood by one of skill in the art that, in some instances, an embodiment can alternatively be described using the language "consisting essentially of" or "consisting of".

## Claims

1. A polymer blend comprising:
poly-DL-lactide at 70 to 94.5 wt%;
poly-D-lactide at 0.5 to 10 wt%; and
a thermoplastic elastomer at 5 to 20 wt%.

2. The polymer blend as claimed in claim 1 comprising the poly-DL-lactide and the poly-D-lactide in combination at not less than 80 wt%.

3. The polymer blend as claimed in claims 1 or 2 wherein the poly-DL-lactide and the poly-D-lactide are derived from plant or naturally occurring organic matter.

4. The polymer blend as claimed in any preceding claim wherein the poly-DL-lactide comprises predominantly L-lactide units relative to D-lactide units by wt%.

5. The polymer blend as claimed in any preceding claim wherein the poly-DL-lactide and/or the poly-D-lactide comprises an optical purity of not less than 99% L.

6. The polymer blend as claimed in any preceding claim wherein:
• the poly-DL-lactide is included at 70-90 wt%; 72-88 wt%; 74-86 wt% or 76-84 wt%;
• the poly-D-lactide is included at 1-9 wt%; 1.5-8.5 wt%; 2-8 wt% or 4-8 wt%. and/or
• the thermoplastic elastomer is included at 6-20 wt%; 8-20 wt%; 10-20 wt%; 12-18 wt% or 13-17 wt%; and optionally:
• wherein any remaining wt% is the poly-DL-lactide.

7. The polymer blend as claimed in any preceding claim wherein the thermoplastic elastomer is any one or a combination of:
• a styrenic block copolymer
• a polyolefin elastomer
• a vulcanizate
• a polyurethane
• a copolyester
• a polyamide
• a polyether block amide (PEBA).

8. The polymer blend as claimed in any preceding claim comprising:
the poly-DL-lactide at 75-84 wt%;
the poly-D-lactide at 4-8 wt%; and
wherein the thermoplastic elastomer is a polyether bock amide at 12-17 wt%.

9. A polymer-based composition comprising:
a polymer blend as claimed in any preceding claim; and
any one of or a combination of:
• a filler;
• a compatibilizer;
• a processing aid; and optionally:
wherein the filler comprises any one or a combination of:
• a mineral based filler,
• calcium carbonate,
• talc,
• glass fibers,
• a silicate,
• a calcium inosilicate material.

10. The composition as claimed in claim 9 wherein:
A) the compatibilizer comprises any one or a combination of:
• a styrene-acrylic multi-functional epoxide oligomer
• a random styrene-acrylonitrile-glycidyl methacrylate terpolymer,
• glycidyl methacrylate,
• maleic anhydride,
• phenyl diisocyanate; and/or
B) the processing aid comprises any one or a combination of:
• PTFE powder,
• An amide wax,
• Rice bran wax,
• Ethylene bis-stearamide,
• silicon dioxide.

11. A method of manufacturing a polymer blend comprising:
blending 70 to 94.5 wt% of a poly-DL-lactide with 0.5 to 10 wt% of a poly-D-lactide; and 5 to 20 wt% of a thermoplastic elastomer to create the polymer blend.

12. A method of polymer processing to create a plastic product comprising the steps of processing the polymer blend or polymer composition of claims 1 to 10 by any one or a combination of:
• extrusion;
• injection moulding;
• blow moulding;
• thermoforming.

13. The method of polymer processing as claimed in claim 12 further comprising:
annealing the plastic product after the step of processing the polymer blend or polymer composition.

14. The method of polymer processing as claimed in claim 13 wherein the step of annealing comprises heating the plastic product at a temperature in the range 50°C to 140°C or 60°C to 130°C to induce crystallinity.

15. A method of creating a plastic filament suitable for 3D printing comprising the method of any one of claims 11 to 12.

## Patentansprüche

1. Ein Polymerblend, das Folgendes beinhaltet:
Poly-DL-Lactid zu 70 bis 94,5 Gew.-%;
Poly-D-Lactid zu 0,5 bis 10 Gew.-%; und
ein thermoplastisches Elastomer zu 5 bis 20 Gew.-%.

2. Polymerblend gemäß Anspruch 1, das das Poly-DL-Lactid und das Poly-D-Lactid in Kombination zu nicht weniger als 80 Gew.-% beinhaltet.

3. Polymerblend gemäß den Ansprüchen 1 oder 2, wobei das Poly-DL-Lactid und das Poly-D-Lactid von pflanzlicher oder natürlich vorkommender organischer Substanz abgeleitet sind.

4. Polymerblend gemäß einem der vorhergehenden Ansprüche, wobei das Poly-DL-Lactid bezogen auf D-Lactid-Einheiten in Gew.-% überwiegend L-Lactid-Einheiten beinhaltet.

5. Polymerblend gemäß einem der vorhergehenden Ansprüche, wobei das Poly-DL-Lactid und/oder das Poly-D-Lactid eine optische Reinheit von nicht weniger als 99 % L beinhaltet.

6. Polymerblend gemäß einem der vorhergehenden Ansprüche, wobei:
• das Poly-DL-Lactid zu 70-90 Gew.-%; 72-88 Gew.-%; 74-86 Gew.-% oder 76-84 Gew.-% enthalten ist;
• das Poly-D-Lactid zu 1-9 Gew.-%; 1,5-8,5 Gew.-%; 2-8 Gew.-% oder 4-8 Gew.-% enthalten ist; und/oder
• das thermoplastische Elastomer zu 6-20 Gew.-%; 8-20 Gew.-%; 10-20 Gew.-%; 12-18 Gew.-% oder 13-17 Gew.-% enthalten ist; und optional:
• wobei etwaige verbleibende Gew.-% das Poly-DL-Lactid sind.

7. Polymerblend gemäß einem der vorhergehenden Ansprüche, wobei das thermoplastische Elastomer eines oder eine Kombination von Folgendem ist:
• ein Styrolblockcopolymer,
• ein Polyolefinelastomer,
• ein Vulkanisat,
• ein Polyurethan,
• ein Copolyester,
• ein Polyamid,
• ein Polyetherblockamid (PEBA).

8. Polymerblend gemäß einem der vorhergehenden Ansprüche, das Folgendes beinhaltet:
das Poly-DL-Lactid zu 75-84 Gew.-%;
das Poly-D-Lactid zu 4-8 Gew.-%; und
wobei das thermoplastische Elastomer ein Polyetherblockamid zu 12-17 Gew.-% ist.

9. Eine polymerbasierte Zusammensetzung, die Folgendes beinhaltet:
ein Polymerblend gemäß einem der vorhergehenden Ansprüche; und
eines oder eine Kombination von Folgendem:
• einen Füllstoff;
• einen Phasenvermittler;
• ein Verarbeitungshilfsmittel; und optional:
wobei der Füllstoff eines oder eine Kombination von Folgendem beinhaltet:
• einen Füllstoff auf Mineralbasis,
• Calciumcarbonat,
• Talk,
• Glasfasern,
• ein Silikat,
• ein Calciuminosilikatmaterial.

10. Zusammensetzung gemäß Anspruch 9, wobei:
A) der Phasenvermittler eines oder eine Kombination von Folgendem beinhaltet:
• ein multifunktionales Styrol-Acryl-Epoxidoligomer,
• ein statistisches Styrol-Acrylnitril-Glycidylmethacrylat-Terpolymer,
• Glycidylmethacrylat,
• Maleinsäureanhydrid,
• Phenyldiisocyanat; und/oder
B) das Verarbeitungshilfsmittel eines oder eine Kombination von Folgendem beinhaltet:
• PTFE-Pulver,
• ein Amidwachs,
• Reiskleiewachs,
• Ethylenbisstearamid,
• Siliciumdioxid.

11. Ein Verfahren zum Herstellen eines Polymerblends, das Folgendes beinhaltet:
Mischen von 70 bis 94,5 Gew.-% eines Poly-DL-Lactids mit 0,5 bis 10 Gew.-% eines Poly-D-Lactids; und 5 bis 20 Gew.-% eines thermoplastischen Elastomers, um das Polymerblend zu erzeugen.

12. Ein Verfahren zur Polymerverarbeitung, um ein Kunststoffprodukt zu erzeugen, das die Schritte des Verarbeitens des Polymerblends oder der Polymerzusammensetzung gemäß den Ansprüchen 1 bis 10 durch eines oder eine Kombination von Folgendem beinhaltet:
• Extrusion;
• Spritzgießen;
• Blasformen;
• Thermoformen.

13. Verfahren zur Polymerverarbeitung gemäß Anspruch 12, das ferner Folgendes beinhaltet: Tempern des Kunststoffprodukts nach dem Schritt des Verarbeitens des Polymerblends oder der Polymerzusammensetzung.

14. Verfahren zur Polymerverarbeitung gemäß Anspruch 13, wobei der Schritt des Temperns das Erwärmen des Kunststoffprodukts auf eine Temperatur im Bereich von 50 °C bis 140 °C oder 60 °C bis 130 °C beinhaltet, um Kristallinität zu induzieren.

15. Ein Verfahren zum Erzeugen eines Kunststofffilaments, das zum 3D-Drucken geeignet ist, das das Verfahren gemäß einem der Ansprüche 11 bis 12 beinhaltet.

## Revendications

1. Un mélange de polymères comprenant :
du poly-DL-lactide à raison de 70 à 94,5 % en poids ;
du poly-D-lactide à raison de 0,5 à 10 % en poids ; et
un élastomère thermoplastique à raison de 5 à 20 % en poids.

2. Le mélange de polymères tel que revendiqué dans la revendication 1 comprenant le poly-DL-lactide et le poly-D-lactide en combinaison à raison de pas moins de 80 % en poids.

3. Le mélange de polymères tel que revendiqué dans les revendications 1 ou 2 dans lequel le poly-DL-lactide et le poly-D-lactide sont dérivés de matière végétale ou de matière organique d'origine naturelle.

4. Le mélange de polymères tel que revendiqué dans n'importe quelle revendication précédente dans lequel le poly-DL-lactide comprend majoritairement des unités L-lactide par rapport aux unités D-lactide en % en poids.

5. Le mélange de polymères tel que revendiqué dans n'importe quelle revendication précédente dans lequel le poly-DL-lactide et/ou le poly-D-lactide comprennent une pureté optique de pas moins de 99 % de L.

6. Le mélange de polymères tel que revendiqué dans n'importe quelle revendication précédente dans lequel :
• le poly-DL-lactide est inclus à raison de 70 à 90 % en poids ; de 72 à 88 % en poids ; de 74 à 86 % en poids ou de 76 à 84 % en poids ;
• le poly-D-lactide est inclus à raison de 1 à 9 % en poids ; de 1,5 à 8,5 % en poids ; de 2 à 8 % en poids ou de 4 à 8 % en poids ; et/ou
• l'élastomère thermoplastique est inclus à raison de 6 à 20 % en poids ; de 8 à 20 % en poids ; de 10 à 20 % en poids ; de 12 à 18 % en poids ou de 13 à 17 % en poids ; et facultativement :
• dans lequel tout % en poids restant correspond au poly-DL-lactide.

7. Le mélange de polymères tel que revendiqué dans n'importe quelle revendication précédente dans lequel l'élastomère thermoplastique est l'un quelconque parmi les suivants ou une combinaison de ceux-ci :
• un copolymère bloc styrénique
• un élastomère polyoléfinique
• un vulcanisat
• un polyuréthane
• un copolyester
• un polyamide
• un polyéther bloc amide (PEBA).

8. Le mélange de polymères tel que revendiqué dans n'importe quelle revendication précédente comprenant :
le poly-DL-lactide à raison de 75 à 84 % en poids ;
le poly-D-lactide à raison de 4 à 8 % en poids ; et
dans lequel l'élastomère thermoplastique est un polyéther bloc amide à raison de 12 à 17 % en poids.

9. Une composition à base de polymère comprenant :
un mélange de polymères tel que revendiqué dans n'importe quelle revendication précédente ; et
l'un quelconque parmi les suivants ou une combinaison de ceux-ci :
• une charge ;
• un agent compatibilisant ;
• un auxiliaire de mise en oeuvre ; et facultativement :
dans lequel la charge comprend l'un quelconque parmi les suivants ou une combinaison de ceux-ci :
• une charge à base minérale,
• du carbonate de calcium,
• du talc,
• des fibres de verre,
• un silicate,
• un matériau d'inosilicate de calcium.

10. La composition telle que revendiquée dans la revendication 9 dans laquelle :
A) l'agent compatibilisant comprend l'un quelconque parmi les suivants ou une combinaison de ceux-ci :
• un oligomère d'époxyde multifonctionnel styrène-acrylique
• un terpolymère de styrène-acrylonitrile-méthacrylate de glycidyle aléatoire,
• du méthacrylate de glycidyle,
• de l'anhydride maléique,
• du diisocyanate de phényle ; et/ou
B) l'auxiliaire de mise en œuvre comprend l'un quelconque parmi les suivants ou une combinaison de ceux-ci :
• de la poudre de **PTFE,**
• une cire d'amide,
• une cire de son de riz,
• du bis-stéaramide d'éthylène,
• du dioxyde de silicium.

11. Un procédé pour fabriquer un mélange de polymères comprenant :
mélanger 70 à 94,5 % en poids d'un poly-DL-lactide avec 0,5 à 10 % en poids d'un poly-D-lactide ; et 5 à 20 % en poids d'un élastomère thermoplastique afin de créer le mélange de polymères.

12. Un procédé pour mettre en œuvre des polymères afin de créer un produit plastique comprenant les étapes consistant à mettre en œuvre le mélange de polymères ou la composition de polymères des revendications 1 à 10 par l'un quelconque parmi les suivants ou une combinaison de ceux-ci :
• extrusion ;
• moulage par injection ;
• moulage par soufflage ;
• thermoformage.

13. Le procédé pour mettre en œuvre des polymères tel que revendiqué dans la revendication 12 comprenant en outre :
recuire le produit plastique après l'étape consistant à mettre en œuvre le mélange de polymères ou la composition de polymères.

14. Le procédé pour mettre en œuvre des polymères tel que revendiqué dans la revendication 13 dans lequel l'étape consistant à recuire comprend le fait de chauffer le produit plastique à une température comprise dans la gamme allant de 50 °C à 140 °C ou de 60 °C à 130 °C afin d'induire la cristallinité.

15. Un procédé pour créer un filament plastique convenant pour l'impression 3D comprenant le procédé de l'une quelconque des revendications 11 à 12.
